# EUROPEAN PATENT SPECIFICATION

(11) **EP 3 044 737 B1**
(45) Date of publication and mention of the grant of the patent: **06.11.2019**
(21) Application number: 14781284.6
(22) Date of filing: 12.09.2014
(51) Int. Cl.: G06K 19/077, G06K 13/063, H05K 13/04, H04B 1/3818

(54) **SIM CARD APPLICATOR AND RELATED METHOD OF OPERATION**
SIM-KARTENAPPLIKATOR UND ZUGEHÖRIGES VERFAHREN ZUM BETRIEB
APPLICATEUR DE CARTE SIM ET PROCÉDÉ DE FONCTIONNEMENT ASSOCIÉ

(30) Priority: 13.09.2013 US 201361877595 P; 24.09.2013 US 201361881708 P
(43) Date of publication of application: 20.07.2016
(73) Proprietor: Knowroaming Ltd, North York, ON M2N 7C1 (CA)
(72) Inventor: STEIN, Mathew, North York, ON M2N 7C1 (CA)
(74) Representative: D Young & Co LLP
(86) International application number: PCT/IB2014/064462
(87) International publication number: WO 2015/036965

(56) References cited:
- EP-A1- 2 068 274
- WO-A1-2007/081382
- US-A1- 2006 175 417
- US-A1- 2012 289 196

## Description

### FIELD OF THE INVENTION

This invention relates to a SIM card applicator and to a related method of operating this applicator.

### BACKGROUND OF THE INVENTION

This invention relates to the subject matter contained in co-pending US application no. 61/760,905. In broad terms, USSN 61/760,905 discloses a system and method for authenticating a mobile device on an alternate communications network that has been selected to provide a user of the mobile device with better calling and/or data rates. In one embodiment, a SIM card overlay in the form of a PCB device is used to achieve the required authentication within the various mobile networks.

As described in USSN 61/760,905, the overlay comprises:
1) A communications processor;
2) A PCB (flexible or otherwise) upon which the communications processor is mounted and wires are routed; and
3) Pads that allow for the communications processor to send/receive information to/from the mobile device's SIM card.

The overlay needs to be accurately attached to the device's SIM card (and in particular to the pads of the SIM card), with this typically needing to be done by the end user. It is thus an aim of the present invention to provide a SIM card applicator, and related method, to easily and accurately achieve this.

EP 2068 274 describes a system with double integrated circuit and use of the system to implement a remote application.

US 2006/175417 considers a dual integrated circuit card system.

WO 2007/081382 relates to a method for providing additional service based on dual UICC.

US 2012/289196 describes a compact form factor integrated circuit card and methods.

### SUMMARY OF THE INVENTION

Aspects of the invention are set out in the attached claims.

### BRIEF DESCRIPTION OF THE DRAWINGS

- **Figure 1**: shows an exploded, perspective view of a SIM card applicator, according to an embodiment of the present invention.
- **Figures 2, 3 and 4**: show first, second and third perspective views of a SIM card applicator, respectively, according to a first embodiment of the present invention;
- **Figures 5 and 6**: show first and second perspective views of a SIM card applicator according to a second embodiment of the present invention;
- **Figure 7**: shows an exploded perspective view of a SIM card applicator, according to a third embodiment of the present invention;
- **Figure 8**: shows an exploded perspective view of a frame arrangement for use in the SIM card applicator shown in Figure 7;
- **Figures 9 and 10**: show first and second perspective views of the frame arrangement shown in Figure 8, respectively, in an assembled form, ready to securely receive a SIM card; and
- **Figure 11**: shows an exploded perspective view of the SIM card applicator in Figure 7, in use.

### DESCRIPTION OF PREFERRED EMBODIMENTS

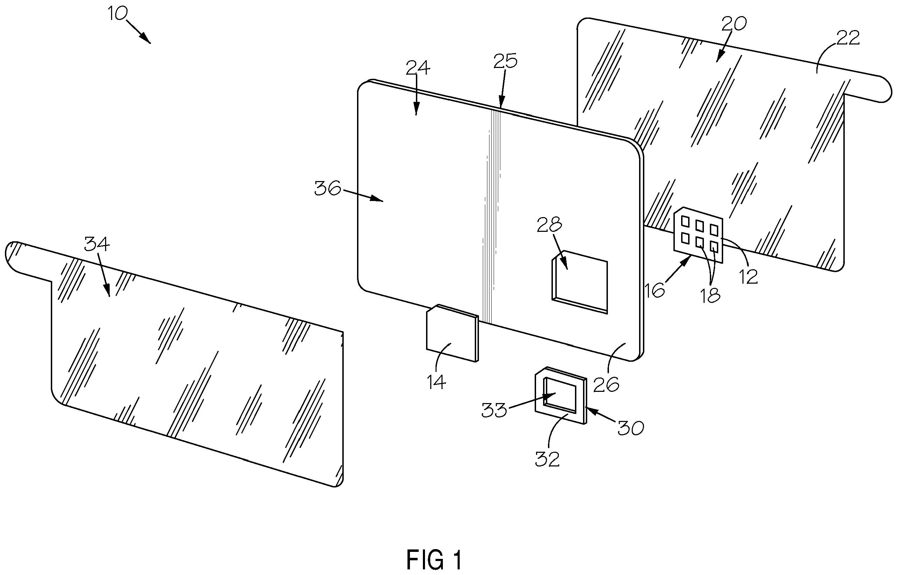

Referring first to Figure 1, a SIM card applicator 10 is provided to enable a communications processing overlay 12 to be attached to a SIM card 14. The SIM card 14 comprises a plurality of SIM card pads (not shown, as they are on the other side of the SIM card). The overlay 12 comprises a communications processing portion 16 and overlay pads 18 that allow for the communications processing portion 16 to send/receive information to/from the SIM card 14, once attached.

The applicator 10 comprises a holder 20 to releasably hold the overlay 12 in place. In an embodiment, the holder 20 comprises an adhesive, clear protective film 22 to which the overlay 12 is releasably secured. In particular, the strength of the adhesive between the overlay 12 and the film 22 is such that the overlay 12 may be separated relatively easily from the film 22, as will be explained in more detail further below.

The applicator 10 further comprises a SIM receiving body 24 to receive and accommodate the SIM card 14, the holder 20 and the SIM receiving body 24 being arranged to correctly align and secure the communications processing portion of the overlay 12 (and in particular the overlay pads 18 of the overlay 12) and the SIM card pads of the SIM card 14. The film 22 is also releasably securable to a first side 25 of the SIM receiving body 24, so as to, initially at least, define an integral body.

In broad terms, therefore, the overlay 12 can be removed or separated from the holder 20, thereby resulting in the communications processing portion of the overlay 12 (and in particular the overlay pads 18 of the overlay 12) being correctly aligned and secured to the SIM card pads, so as to define a modified SIM card for use in a mobile device.

In an embodiment, the SIM receiving body 24 comprises a credit card style holder 26 with a SIM card-sized cutout 28 for accommodating the SIM card 14, with the cutout 28 being aligned with the overlay 12.

The applicator may include an adaptor or clip 30 that can be placed within the cutout 28, the adaptor 30 being arranged to accommodate a variety of different (i.e. smaller) sizes of SIM cards. Irrespective of the SIM card size, the pads on the SIM card 14 are uniform, with the pads 18 on the overlay 12 being arranged accordingly. The adaptor (or adaptors) may thus simply take the form of a frame 32 that fits snugly within the cutout 28, with the frame defining a smaller internal aperture 33 for receiving the (smaller) SIM card, if required/necessary.

In an embodiment, the applicator 10 comprises a second adhesive protective film 34 that is releasably securable to a second side 36 of the SIM receiving body 24, so as to cover the overlay 12 on the other side of the SIM receiving body 24. The overlay 12 has adhesive applied to it, with the purpose of the second adhesive protective film 34 being to shield the overlay 12 from accidental damage and to prevent the adhesive on the overlay 12 from drying out.

Thus, in use, a user first removes the second adhesive protective film 34 from the second side 36 of the SIM receiving body 24. This exposes the cutout 28, behind which the overlay 12 would be positioned and aligned with the cutout 28. The user then places their SIM card 14 within the cutout 28. If required i.e. if the SIM card 14 is smaller than the cutout, the user may use the adaptor 30 to securely fit the SIM card 14 within the cutout 28. The user then firmly presses the SIM card 14 against the overlay 12, with the adhesive on the overlay 12 thus ensuring that the SIM card 14 is firmly bonded to the overlay 12. The protective film 22 on the first side 25 of the SIM receiving body 24 is then removed from the SIM receiving body 24, with the bonded overlay-SIM card then being removed from the protective film 22, for subsequent use in the user's mobile device.

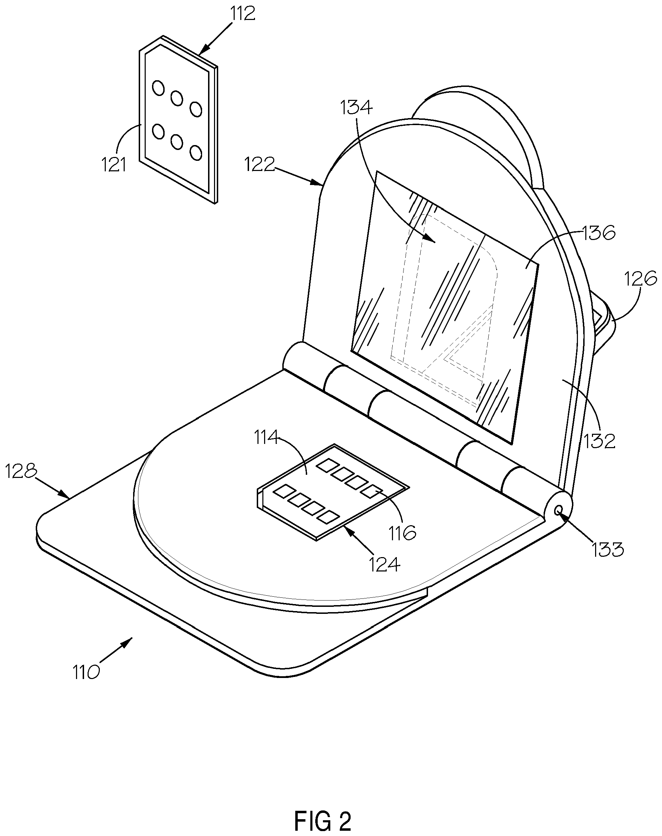

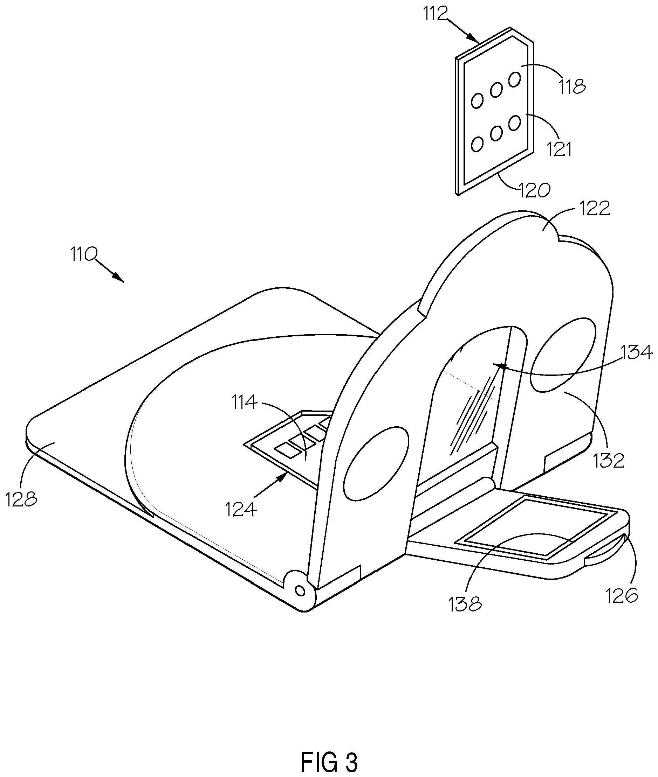

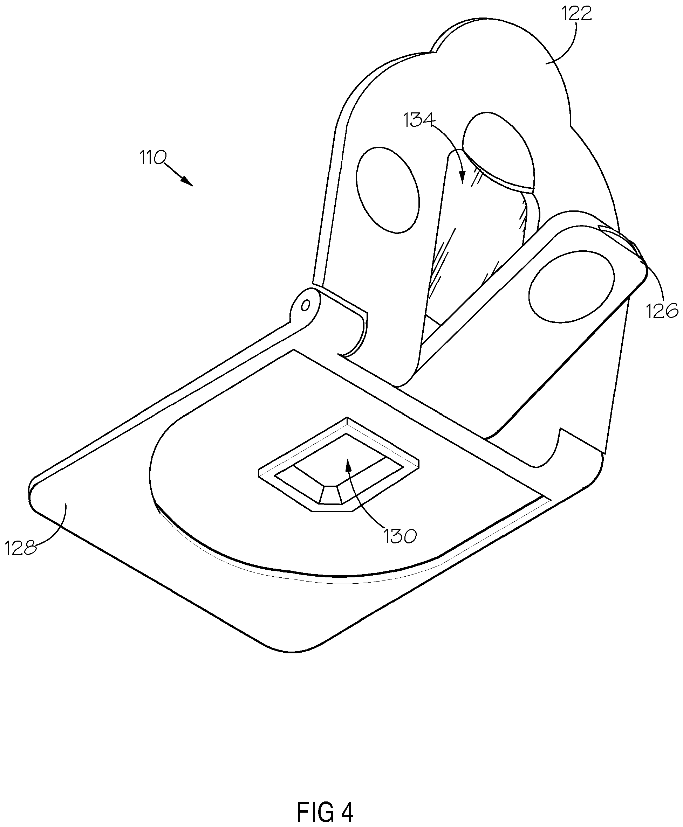

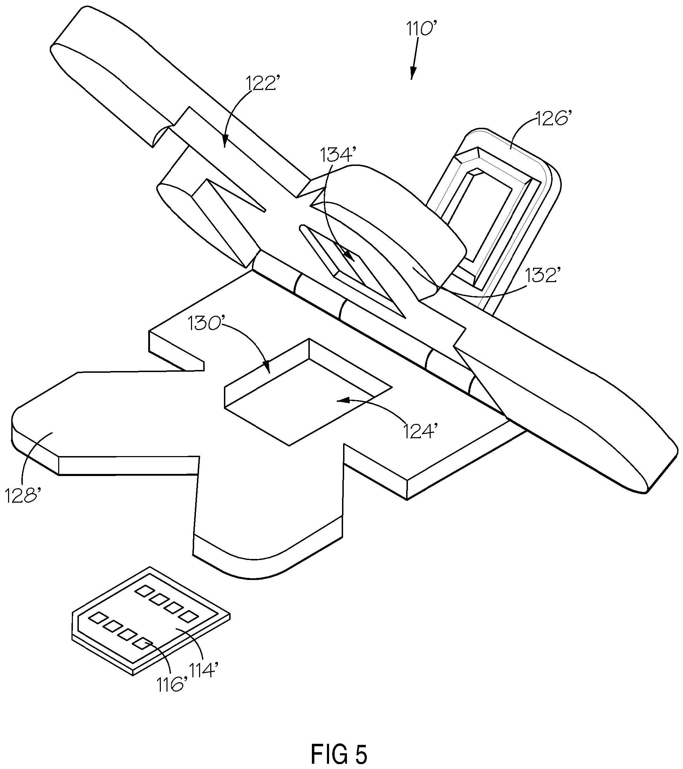

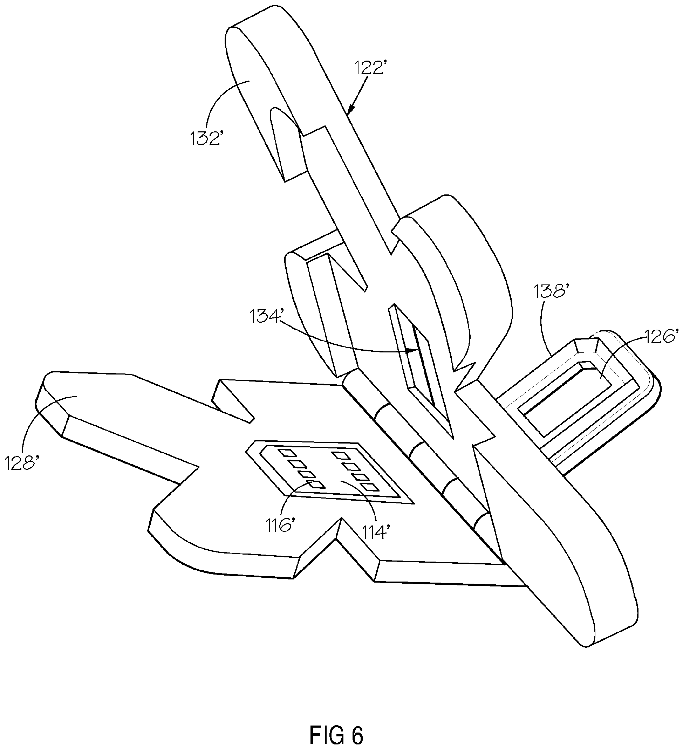

Turning now to Figures 2 to 4, and 5 and 6, two different embodiments of a SIM card applicator 110, 110' are shown. However, there are substantial similarities between these two embodiments, and thus reference numerals in Figures 5 and 6 for similar components shown in Figures 2 to 4, are shown appended with a '.

The SIM card applicator 110, 110' enables a communications processing overlay 112 to be attached to a SIM card 114, 114', the SIM card 114, 114' comprising a plurality of SIM card pads 116, 116'.

In an embodiment, the overlay 112 comprises a communications processing portion 118 and a surrounding carrier portion 120.

The applicator 110, 110' comprises a holder 122, 122' to hold the overlay 112 in place, and a SIM receiving body 124, 124' to receive the SIM card 114, 114'. The holder 122, 122' and the SIM receiving body 124, 124' are arranged to correctly align and secure the communications processing portion 118 of the overlay 112 and the SIM card pads 116, 116' of the SIM card 114, 114'.

The applicator 110, 110' further comprises a cutter element 126, 126' that can be operated to cut out the communications processing portion 118 of the overlay 112 from the surrounding carrier portion 120. In broad terms, this results in the communications processing portion 118 of the overlay 112 being correctly aligned and secured to the SIM card pads 116, 116', so as to define a modified SIM card for use in a mobile device.

In one version, the applicator 110, 110' comprises a base plate 128, 128' to define the SIM receiving body 124, 124', the base plate 128, 128' defining a SIM-shaped aperture 130, 130' to accommodate the SIM card 114, 114'.

In this first version, the applicator 110, 110' comprises a frame 132, 132' that is pivotally movable relative to the base plate 128, 128', via pin 133. The frame 132, 132' defines a window 134, 134' for accommodating the overlay 112, the window 134, 134' and the aperture 130, 130' in the base plate 128, 128' being in alignment when the base plate 128, 128' and the frame 132, 132' are pivotally moved towards each other, so as to correctly align the communications processing portion 118 of the overlay 112 with the SIM card pads 116, 116'.

In an embodiment of this first version, the frame 132, 132' comprises securing means, such as an adhesive film 136 (not shown in Figures 5 and 6, but it would be similar), for securing and correctly positioning, the overlay 112 to the frame 132, 132', and for securing the overlay 112 to the SIM card 114, 114' once the base plate 128, 128' and the frame 132, 132' have been pivotally moved towards each other and manually pressed together.

In an embodiment of this first version, the cutter element 126, 126' includes a cutting formation 138, 138' that is shaped to correspond to the interface 121 between the communications processing portion 118 and the surrounding carrier portion 120, to facilitate the separation of the communications processing portion 118 from the surrounding carrier portion 120.

Preferably, the interface 121 between the communications processing portion 118 and the surrounding carrier portion 120 is perforated, to further facilitate the separation of the communications processing portion 118 from the surrounding carrier portion 120.

In an embodiment of this first version, the cutter element 126, 126' is pivotally movable, also via pin 133, relative to the frame 132, 132' and the base plate 128, 128'. Alternatively, the cutter element 126, 126' is a separate component, not attached to either the frame 132, 132' or the base plate 128, 128'.

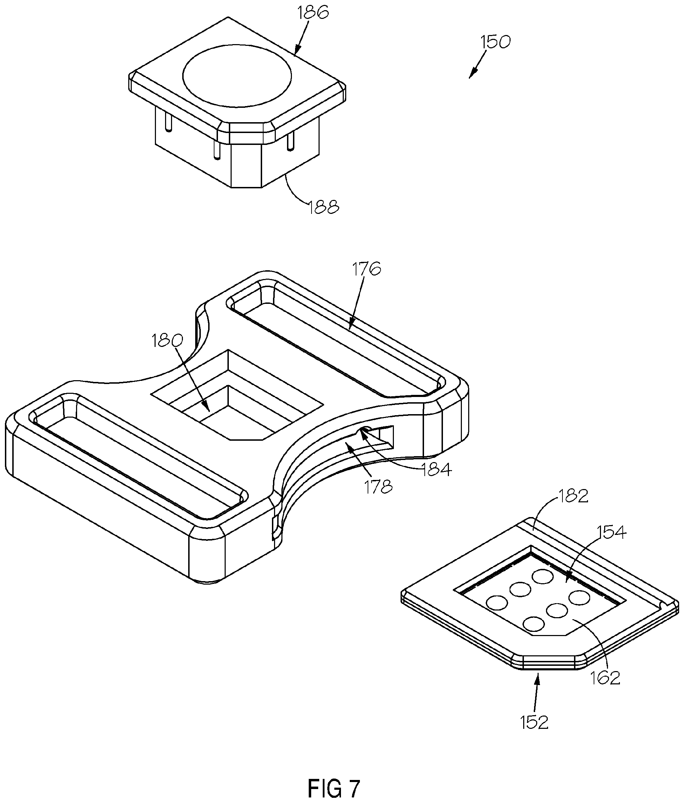

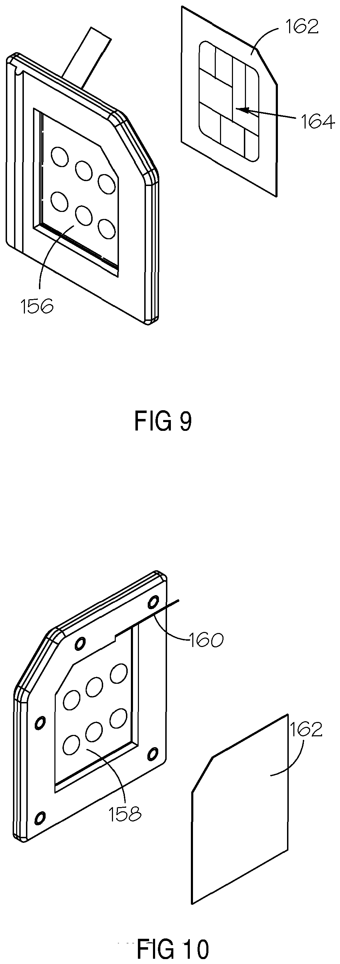

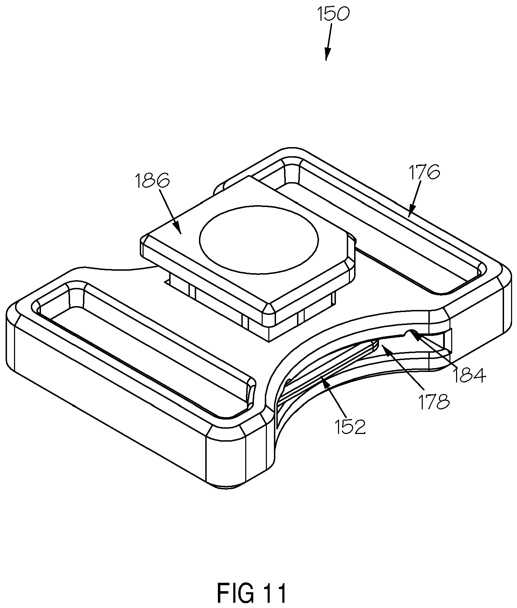

Turning now to Figures 7 to 11, a SIM card applicator 150 includes a frame arrangement 152 that integrally defines both the holder and the SIM receiving body, the frame arrangement 152 defining a central aperture 154.

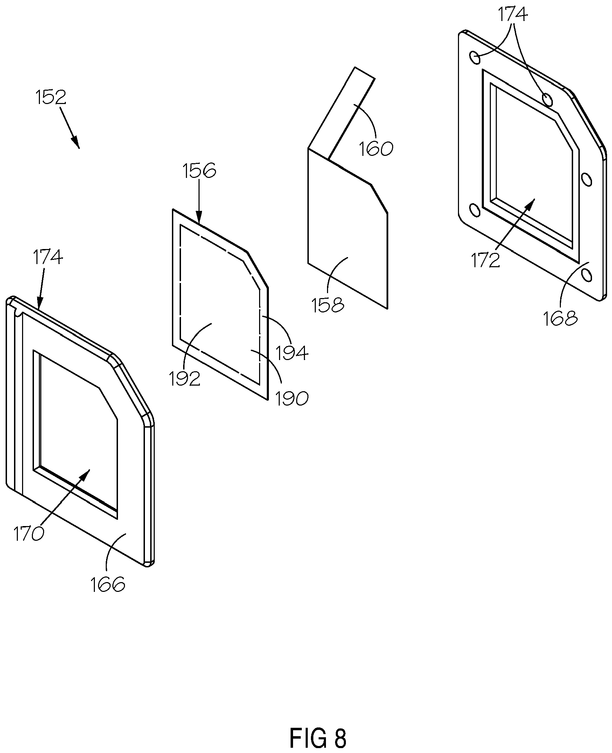

With reference to Figures 8 to 10 in particular, the overlay 156 is fitted with a removable covering film 158 (having a protruding tab 160), which upon removal, ensures the securing, and correct alignment, of the SIM card 162 to the overlay 156 , the SIM card having pads 164.

In an embodiment, the frame arrangement 152 comprises a pair of plastic frame members 166, 168, each defining central apertures 170, 172, the frame members 166, 168 having securing members to secure the frame members 166, 168 together and to sandwich the overlay 156 and its associated removable covering film 158 between the frame members 166, 168.

In this alternate version, the applicator 150 comprises a jig body 176 having a slot 178 to receive the frame arrangement 152, the jig body 176 defining a central aperture 180 to register with the central aperture 170, 172 of the frame arrangement 152 when the frame arrangement 152 is inserted into the jig body 176.

Advantageously, the frame arrangement 152 and the jig body 176 include complementary guiding formations 182, 184 to facilitate the insertion of the frame arrangement 152 into the slot 178 of the jig body 176.

In an embodiment, the cutter element 186 includes a cutting formation 188 that is shaped to correspond to a perforated interface 190 between the communications processing portion 192 and the surrounding carrier portion 194, to facilitate the separation of the communications processing portion 192 from the surrounding carrier portion 194.

The cutter element 186 in this version is thus a separate component, which can be manually moved so that the cutting formation 188 is punched through the aligned apertures in the frame arrangement 152 and the jig body 176.

The present invention thus provides an easy to use SIM card applicator to correctly secure the overlay to the user's SIM card.

## Claims

1. A SIM card applicator (10) to enable a communications processing overlay (12) to be attached to a SIM card (14), the SIM card comprising a plurality of SIM card pads (116, 116'), the overlay comprising a communications processing portion (16, 192) and overlay pads (18) that allow for the communications processing portion to send/receive information to/from the SIM card, once attached, the applicator comprising:
a holder (20) to releasably hold the overlay in place; and
a SIM receiving body (24) to receive the SIM card, the holder and the SIM receiving body being arranged to correctly align and secure the communications processing portion of the overlay and the SIM card pads of the SIM card,
wherein the overlay can be removed or separated from the holder, thereby resulting in the communications processing portion of the overlay being correctly aligned and secured to the SIM card pads, so as to define a modified SIM card for use in a mobile device.

2. The SIM card applicator of claim 1, wherein the SIM receiving body comprises a credit card style holder with a cutout for accommodating the SIM card, with the cutout being aligned with the overlay, with the applicator including an adaptor that can be placed within the cutout, the adaptor being arranged to accommodate a variety of different sizes of SIM cards.

3. The SIM card applicator of any preceding claim, wherein the holder comprises an adhesive protective film (22) to which the overlay is releasably secured, the film also being releasably securable to a first side of the SIM receiving body.

4. The SIM card applicator of any preceding claim, wherein the applicator comprises a second adhesive protective film (34) that is releasably securable to a second side of the SIM receiving body, so as to cover the overlay on the other side of the SIM receiving body.

5. The SIM card applicator of claim 1, wherein the overlay comprises a carrier portion (120; 194) that surrounds the communications processing portion, with the applicator being arranged to remove or separate the communications processing portion of the overlay from the surrounding carrier portion, the applicator including a cutter element (126; 126') that can be operated to cut out the communications processing portion of the overlay from the surrounding carrier portion, with the applicator comprising a base plate to define the SIM receiving body, the base plate defining an aperture to accommodate the SIM card.

6. The SIM card applicator of claim 5, wherein the applicator comprises a frame (132, 132') that is pivotally movable relative to the base plate, the frame defining a window (134, 134') for accommodating the overlay, the window and the aperture in the base plate being in alignment when the base plate and the frame are pivotally moved towards each other, so as to correctly align the communications processing portion of the overlay with the SIM card pads, with the frame comprising securing means, such as an adhesive film, for securing, and correctly positioning, the overlay to the frame, and for securing the overlay to the SIM card once the base plate and the frame have been pivotally moved towards each other and pressed together.

7. The SIM card applicator of either claim 5 or claim 6, wherein the cutter element includes a cutting formation (138, 138') that is shaped to correspond to the interface (121) between the communications processing portion and the surrounding carrier portion, to facilitate the separation of the communications processing portion from the surrounding carrier portion, with the interface between the communications processing portion and the surrounding carrier portion being weakened to further facilitate the separation of the communications processing portion from the surrounding carrier portion.

8. The SIM card applicator of any of claims 5 to 7, wherein the surrounding carrier portion comprises a tape to which the communications processing portion is releasably secured, with the cutter element being pivotally movable relative to the frame and the base plate, with the cutter element, optionally, being a separate component not attached to the frame and base plate.

9. The SIM card applicator of claim 5, wherein a frame arrangement (152) is provided that integrally defines both the holder and the SIM receiving body, the frame arrangement defining a central aperture, wherein the applicator comprises a jig body (176) having a slot (178) to receive the frame arrangement, the jig body defining a central aperture (170, 172) to register with the central aperture of the frame arrangement when the frame arrangement is inserted into the jig body, and wherein the overlay is fitted with a removable covering film, which upon removal, ensures the securing, and correct alignment, of the SIM card to the overlay.

10. The SIM card applicator of claim 9, wherein the frame arrangement comprises a pair of plastic frame members (166), each defining the central aperture, the frame members having securing members to secure the frame members together and to sandwich the overlay and its associated removable covering film between the frame members, wherein the frame arrangement and the jig body include complementary guiding formations to facilitate the insertion of the frame arrangement into the slot of the jig body.

11. The SIM card applicator of any of claims 9 or 10, wherein the cutter element includes a cutting formation (188) that is shaped to correspond to a perforated interface (190) between the communications processing portion and the surrounding carrier portion, to facilitate the separation of the communications processing portion from the surrounding carrier portion, wherein, optionally, the cutter element is a separate component, which can be manually moved so that the cutting formation is punched through the aligned apertures in the frame arrangement and the jig body.

12. A method of operating a SIM card applicator (10) to enable a communications processing overlay (12) to be attached to a SIM card (14), the SIM card comprising a plurality of SIM card pads (116, 116')and the overlay comprising a communications processing portion (16; 192) and overlay pads (18), the method comprising:
providing a holder (20) to which the overlay is releasably secured;
aligning the overlay within a cutout (28) defined in a SIM receiving body (24) of the SIM card applicator, the overlay having an adhesive on an exposed face;
locating the SIM card within the cutout;
firmly bonding the SIM card to the communications processing portion of the overlay; and
removing the bonded SIM card and overlay from the holder, thereby resulting in the communications processing portion of the overlay being correctly aligned and secured to the SIM card pads, so as to define a modified SIM card for use in a mobile device.

## Patentansprüche

1. SIM-Kartenapplikator (10) zum Ermöglichen, dass ein Kommunikationsverarbeitungsoverlay (12) an einer SIM-Karte (14) befestigt wird, wobei die SIM-Karte eine Vielzahl von SIM-Kartenpads (116, 116') umfasst, wobei das Overlay einen Kommunikationsverarbeitungsabschnitt (16, 192) und Overlaypads (18) umfasst, die es erlauben, dass der Kommunikationsverarbeitungsabschnitt nach der Befestigung Informationen an eine SIM-Karte sendet bzw. von dieser empfängt, wobei der Applikator Folgendes umfasst:
einen Halter (20) zum lösbaren Halten des Overlays am Ort und
einen SIM-Empfangskörper (24) zum Empfangen der SIM-Karte, wobei der Halter und der SIM-Empfangskörper angeordnet sind, den Kommunikationsverarbeitungsabschnitt des Overlays und die SIM-Kartenpads der SIM-Karte korrekt auszurichten und zu sichern,
wobei das Overlay vom Halter entfernt oder getrennt werden kann, was darin resultiert, dass der Kommunikationsverarbeitungsabschnitt des Overlays korrekt auf die SIM-Kartenpads ausgerichtet und an diesen gesichert wird, um eine modifizierte SIM-Karte zur Verwendung in einer mobilen Vorrichtung zu definieren.

2. SIM-Kartenapplikator nach Anspruch 1, wobei der SIM-Empfangskörper einen kreditkartenartigen Halter mit einem Ausschnitt zum Aufnehmen der SIM-Karte umfasst, wobei der Ausschnitt auf das Overlay ausgerichtet ist, wobei der Applikator einen Adapter beinhaltet, der im Ausschnitt platziert werden kann, wobei der Adapter angeordnet ist, eine Vielfalt von verschiedenen Größen von SIM-Karten aufzunehmen.

3. SIM-Kartenapplikator nach einem der vorhergehenden Ansprüche, wobei der Halter eine Schutzklebefolie (22) umfasst, an der das Overlay lösbar gesichert ist, wobei die Folie auch an einer ersten Seite des SIM-Empfangskörpers lösbar gesichert ist.

4. SIM-Kartenapplikator nach einem der vorhergehenden Ansprüche, wobei der Applikator eine zweite Schutzklebefolie (34) umfasst, die an einer zweiten Seite des SIM-Empfangskörpers lösbar gesichert ist, um das Overlay auf der anderen Seite des SIM-Empfangskörpers abzudecken.

5. SIM-Kartenapplikator nach Anspruch 1, wobei das Overlay einen Trägerabschnitt (120; 194) umfasst, der den Kommunikationsverarbeitungsabschnitt umgibt, wobei der Applikator angeordnet ist, den Kommunikationsverarbeitungsabschnitt des Overlays vom umgebenden Trägerabschnitt zu entfernen oder zu trennen, wobei der Applikator ein Schneideelement (126; 126') beinhaltet, das betrieben werden kann, um den Kommunikationsverarbeitungsabschnitt des Overlays aus dem umgebenden Trägerabschnitt zu schneiden, wobei der Applikator eine Grundplatte zum Definieren des SIM-Empfangskörpers umfasst, wobei die Grundplatte eine Öffnung zum Aufnehmen der SIM-Karte definiert.

6. SIM-Kartenapplikator nach Anspruch 5, wobei der Applikator einen Rahmen (132, 132') umfasst, der relativ zur Grundplatte schwenkbar bewegbar ist, wobei der Rahmen ein Fenster (134, 134') zum Aufnehmen des Overlays definiert, wobei das Fenster und die Öffnung in der Grundplatte ausgerichtet sind, wenn die Grundplatte und der Rahmen schwenkbar zueinander bewegt werden, um den Kommunikationsverarbeitungsabschnitt des Overlays korrekt auf die SIM-Kartenpads auszurichten, wobei der Rahmen Sicherungsmittel, wie etwa eine Klebefolie, zum Sichern und korrekten Positionieren des Overlays am Rahmen und zum Sichern des Overlays an der SIM-Karte, nachdem die Grundplatte und der Rahmen schwenkbar zueinander bewegt und zusammengedrückt wurden, umfasst.

7. SIM-Kartenapplikator nach Anspruch 5 oder Anspruch 6, wobei das Schneideelement eine Schneideformation (138, 138') beinhaltet, die geformt ist, um der Schnittstelle (121) zwischen dem Kommunikationsverarbeitungsabschnitt und dem umgebenden Trägerabschnitt zu entsprechen, um die Trennung des Kommunikationsverarbeitungsabschnitts vom umgebenden Trägerabschnitt zu vereinfachen, wobei die Schnittstelle zwischen dem Kommunikationsverarbeitungsabschnitt und dem umgebenden Trägerabschnitt geschwächt wird, um die Trennung des Kommunikationsverarbeitungsabschnitts vom umgebenden Trägerabschnitt weiter zu vereinfachen.

8. SIM-Kartenapplikator nach einem der Ansprüche 5 bis 7, wobei der umgebende Trägerabschnitt ein Band umfasst, an dem der Kommunikationsverarbeitungsabschnitt lösbar gesichert ist, wobei das Schneideelement relativ zum Rahmen und zur Grundplatte schwenkbar bewegbar ist, wobei das Schneideelement wahlweise eine separate Komponente ist, die nicht am Rahmen und an der Grundplatte befestigt ist.

9. SIM-Kartenapplikator nach Anspruch 5, wobei eine Rahmenanordnung (152) bereitgestellt ist, die sowohl den Halter als auch den SIM-Empfangskörper integral definiert, wobei die Rahmenanordnung eine zentrale Öffnung definiert, wobei der Applikator einen Gestellkörper (176) mit einem Schlitz (178) zum Empfangen der Rahmenanordnung umfasst, wobei der Gestellkörper eine zentrale Öffnung (170, 172) zum Registrieren mit der zentralen Öffnung der Rahmenanordnung, wenn die Rahmenanordnung in den Gestellkörper eingesetzt wird, definiert und wobei das Overlay mit einer entfernbaren Abdeckfolie versehen ist, die nach dem Entfernen die Sicherung der SIM-Karte am Overlay und deren korrekte Ausrichtung darauf sicherstellt.

10. SIM-Kartenapplikator nach Anspruch 9, wobei die Rahmenanordnung ein Paar von Kunststoffrahmenbauteilen (166) umfasst, von denen jedes die zentrale Öffnung definiert, wobei die Rahmenbauteile Sicherungsbauteile zum Sichern der Rahmenbauteile aneinander und zum Einschließen des Overlays und dessen zugehörige entfernbare Abdeckfolie zwischen den Rahmenbauteilen aufweisen, wobei die Rahmenanordnung und der Gestellkörper ergänzende Führungsformationen beinhalten, um das Einsetzen der Rahmenanordnung in den Schlitz des Gestellkörpers zu erleichtern.

11. SIM-Kartenapplikator nach Anspruch 9 oder 10, wobei das Schneideelement eine Schneideformation (188) beinhaltet, die geformt ist, um einer perforierten Schnittstelle (190) zwischen dem Kommunikationsverarbeitungsabschnitt und dem umgebenden Trägerabschnitt zu entsprechen, um die Trennung des Kommunikationsverarbeitungsabschnitts vom umgebenden Trägerabschnitt zu erleichtern, wobei das Schneideelement wahlweise eine separate Komponente ist, die manuell bewegt werden kann, derart, dass die Schneideformation durch die ausgerichteten Öffnungen in der Rahmenanordnung und im Gestellkörper stößt.

12. Verfahren zum Betreiben eines SIM-Kartenapplikators (10) zum Ermöglichen, dass ein Kommunikationsverarbeitungsoverlay (12) an einer SIM-Karte (14) befestigt wird, wobei die SIM-Karte eine Vielzahl von SIM-Kartenpads (116, 116') umfasst und das Overlay einen Kommunikationsverarbeitungsabschnitt (16; 192) und Overlaypads (18) umfasst, wobei das Verfahren Folgendes umfasst:
Bereitstellen eines Halters (20), an dem das Overlay lösbar gesichert wird;
Ausrichten des Overlays in einem Ausschnitt (28), der in einem SIM-Empfangskörper (24) des SIM-Kartenapplikators definiert ist, wobei das Overlay einen Kleber auf einer freiliegenden Fläche aufweist;
Lokalisieren der SIM-Karte im Ausschnitt;
festes Bonden der SIM-Karte an den Kommunikationsverarbeitungsabschnitt des Overlays und Entfernen der gebondeten SIM-Karte und des Overlays vom Halter, was darin resultiert, dass der Kommunikationsverarbeitungsabschnitt des Overlays korrekt auf die SIM-Kartenpads ausgerichtet und an diesen gesichert wird, um eine modifizierte SIM-Karte zur Verwendung in einer mobilen Vorrichtung zu definieren.

## Revendications

1. Applicateur de carte SIM (10) pour permettre à une surcouche de traitement de communications (12) d'être fixée à une carte SIM (14), la carte SIM comprenant une pluralité de plots de contact de carte SIM (116, 116'), la surcouche comprenant une partie de traitement de communications (16, 192) et des plots de contact de surcouche (18) qui permettent à la partie de traitement de communications d'envoyer/de recevoir des informations depuis/vers la carte SIM, une fois celle-ci fixée, l'applicateur comprenant :
un support (20) pour maintenir de façon amovible la surcouche en place ; et
un corps de réception de SIM (24) pour recevoir la carte SIM, le support et le corps de réception de SIM étant agencés pour aligner et fixer correctement la partie de traitement de communications de la surcouche et les plots de contact de carte SIM de la carte SIM,
où la surcouche peut être enlevée ou séparée du support, conduisant ainsi à ce que la partie de traitement de communications de la surcouche soit correctement alignée et fixée aux plots de contact de carte SIM, de manière à définir une carte SIM modifiée pour une utilisation dans un dispositif mobile.

2. Applicateur de carte SIM selon la revendication 1, dans lequel le corps de réception de SIM comprend un support de type carte de crédit avec une découpe pour recevoir la carte SIM, la découpe étant alignée avec la surcouche, l'applicateur comprenant un adaptateur qui peut être placé dans la découpe, l'adaptateur étant agencé pour recevoir toute une variété de différentes tailles de cartes SIM.

3. Applicateur de carte SIM selon l'une quelconque des revendications précédentes, dans lequel le support comprend un film de protection adhésif (22) sur lequel la surcouche est fixée de manière amovible, le film pouvant également être fixé de manière amovible sur un premier côté du corps de réception de SIM.

4. Applicateur de carte SIM selon l'une quelconque des revendications précédentes, dans lequel l'applicateur comprend un second film de protection adhésif (34) qui peut être fixé de manière amovible sur un second côté du corps de réception de SIM, de manière à couvrir la surcouche de l'autre côté du corps de réception de SIM.

5. Applicateur de carte SIM selon la revendication 1, dans lequel la surcouche comprend une partie porteuse (120 ; 194) qui entoure la partie de traitement de communications, l'applicateur étant agencé pour enlever ou séparer la partie de traitement de communications de la surcouche de la partie porteuse en périphérie, l'applicateur comprenant un élément de coupe (126 ; 126') qui peut être utilisé pour découper la partie de traitement de communications de la surcouche de la partie porteuse en périphérie, l'applicateur comprenant une plaque de base pour définir le corps de réception de SIM, la plaque de base définissant une ouverture pour accueillir la carte SIM.

6. Applicateur de carte SIM selon la revendication 5, dans lequel l'applicateur comprend une structure (132, 132') qui est mobile de manière pivotante par rapport à la plaque de base, la structure définissant une fenêtre (134, 134') pour recevoir la surcouche, la fenêtre et l'ouverture dans la plaque de base étant alignées lorsque la plaque de base et la structure sont déplacées de façon pivotante l'une vers l'autre, afin d'aligner correctement la partie de traitement de communications de la surcouche avec les plots de contact de carte SIM, la structure comprenant des moyens de fixation, tels qu'un film adhésif, pour fixer et positionner correctement la surcouche sur la structure, et pour fixer la surcouche à la carte SIM une fois que la plaque de base et la structure ont été déplacées par pivotement l'une vers l'autre et pressées ensemble.

7. Applicateur de carte SIM selon la revendication 5 ou la revendication 6, dans lequel l'élément de coupe comprend une formation de coupe (138, 138') qui est formée pour correspondre à l'interface (121) entre la partie de traitement de communications et la partie porteuse en périphérie, pour faciliter la séparation de la partie de traitement de communications de la partie porteuse en périphérie, l'interface entre la partie de traitement de communications et la partie porteuse en périphérie étant affaiblie pour faciliter davantage la séparation de la partie de traitement de communications de la partie porteuse en périphérie.

8. Applicateur de carte SIM selon l'une quelconque des revendications 5 à 7, dans lequel la partie porteuse en périphérie comprend une bande à laquelle la partie de traitement de communications est fixée de manière amovible, l'élément de coupe étant mobile par pivotement par rapport à la structure et à la plaque de base, l'élément de coupe étant, en option, un composant séparé non fixé à la structure, ni à la plaque de base.

9. Applicateur de carte SIM selon la revendication 5, dans lequel un agencement de structure (152) est pourvu, lequel définit intégralement à la fois le support et le corps de réception de SIM, l'agencement de structure définissant une ouverture centrale, où l'applicateur comprend un corps de gabarit (176) ayant une fente (178) pour recevoir l'agencement de structure, le corps de gabarit définissant une ouverture centrale (170, 172) pour s'inscrire avec l'ouverture centrale de l'agencement de structure lorsque l'agencement de structure est inséré dans le corps de gabarit, et où la surcouche est munie d'un film de recouvrement amovible qui, après enlèvement, assure la fixation et l'alignement corrects de la carte SIM sur la surcouche.

10. Applicateur de carte SIM selon la revendication 9, dans lequel l'agencement de structure comprend une paire d'éléments de structure en plastique (166), chacun définissant l'ouverture centrale, les éléments de structure ayant des éléments de fixation pour fixer les éléments de structure ensemble et pour prendre en sandwich la surcouche et son film de recouvrement amovible associé entre les éléments de structure, où l'agencement de structure et le corps de gabarit comprennent des formations de guidage complémentaires pour faciliter l'insertion de l'agencement de structure dans la fente du corps de gabarit.

11. Applicateur de carte SIM selon l'une quelconque des revendications 9 ou 10, dans lequel l'élément de coupe comprend une formation de coupe (188) qui est formée pour correspondre à une interface perforée (190) entre la partie de traitement de communications et la partie porteuse périphérique, pour faciliter la séparation de la partie de traitement de communications de la partie porteuse périphérique, où, en option, l'élément de coupe est un composant séparé, qui peut être déplacé manuellement de manière à ce que la formation de coupe soit perforée à travers les ouvertures alignées de l'agencement de structure et du corps de gabarit.

12. Procédé de fonctionnement d'un applicateur de carte SIM (10) pour permettre à une surcouche de traitement de communications (12) d'être fixée à une carte SIM (14), la carte SIM comprenant une pluralité de plots de contact de carte SIM (116, 116') et la surcouche comprenant une partie de traitement de communications (16 ; 192) et des plots de contact de surcouche (18), le procédé comprenant les étapes suivantes :
fournir un support (20) auquel la surcouche est fixée de manière amovible ;
aligner la surcouche à l'intérieur d'une découpe (28) définie dans un corps de réception de SIM (24) de l'applicateur de carte SIM, la surcouche ayant un adhésif sur une face exposée ;
localiser la carte SIM à l'intérieur de la découpe ;
coller fermement la carte SIM à la partie de traitement des communications de la surcouche ; et
retirer la carte SIM collée et la surcouche du support, de manière à ce que la partie de traitement des communications de la surcouche soit correctement alignée et fixée aux plots de contact de carte SIM, afin de définir une carte SIM modifiée pour une utilisation dans un appareil mobile.
